# EUROPÄISCHE PATENTSCHRIFT

(11) **EP 1 930 212 B1**
(45) Veröffentlichungstag und Bekanntmachung des Hinweises auf die Patenterteilung: **10.11.2010**
(21) Anmeldenummer: 06025076.8
(22) Anmeldetag: 04.12.2006
(51) Int. Cl.: B60P 7/08, B65D 71/04

(54) **Ladungssicherungswinkel**
Load securing angle bracket
Angle de sécurisation de charge

(43) Veröffentlichungstag der Anmeldung: 11.06.2008
(73) Patentinhaber: Thomas Huwer KG, 55758 Oberreidenbach (DE)
(72) Erfinder: Huwer, Thomas, 55758 Oberreidenbach (DE)
(74) Vertreter: Erb, Henning

(56) Entgegenhaltungen:
- WO-A-2005/030593
- WO-A-2006/125107
- DE-U1-202005 007 993
- US-A- 4 938 357
- US-A- 5 226 764
- US-A1- 2003 106 187

## Beschreibung

Die vorliegende Erfindung befasst sich mit einem Ladungssicherungswinkel mit wenigstens zwei im wesentlichen rechtwinklig zueinander liegenden Schenkeln zur Transportsicherung von Gütern und wenigstens zwei Andruckbereichen für einen über den Winkel vorlaufenden Spanngurt, wobei die Andruckbereiche in der Verlaufsrichtung des Spanngurtes beabstandet sind und der Ladungssicherungswinkel eine Fangvorrichtung zum Verhindern eines unkontrollierten Umherfliegens beim Lösen des Spanngurtes aufweist, wobei die Fangvorrichtung aus wenigstens einem Führungsschlitz (48) zum Durchführen des Spanngurtes besteht und der Führungsschlitz (48) größer als der Querschnitt des durchzuführenden Spanngurtes ausgebildet ist.

Um Güter, beispielsweise plattenförmige Elemente, von einem Herstellungs- oder Lagerort zu einem Einsatzort transportieren zu können, werden diese auf Rahmenelementen, Paletten oder anderen Tragevorrichtungen gestapelt bzw. aufgesetzt. Für das Fixieren der gestapelten plattenförmigen Elemente, z. B. Gipskartonplatten, werden als Spannorgane meist Gurte verwendet, die mit Hilfe von Spannvorrichtungen um den Stapel der Elemente gespannt werden. Damit das Einleiten der Spannkräfte an den Kanten der äußeren Platten nicht zu Beschädigungen führt, werden an den Stapelkanten zwischen den plattenförmigen Elementen und den Spannorganen winkelförmige Kantenschutzelemente eingesetzt, die auch als Ladungssicherungswinkel bezeichnet werden. Zur Vermeidung von Transportschaden ist aus der DE 20 2005 007 993 U1 ein Kantenschutzwinkel bekannt, der zwei beabstandete Andruckbereiche für einen über den Winkel verlaufenden Spanngurt aufweist. Durch den weiteren Andruckbereich erfolgt eine gleichmäßigere Einleitung der Spannkraft in die Fläche der Güter. Es hat sich jedoch gezeigt, dass es beim Lösen der Spanngurte zu einem unkontrollierten Umherfliegen der Kantenschutzwinkel kommen kann. Dies liegt daran, dass beim Entfernen der Spanngurte die in dem Gurt vorhandene Spannkraft in der Regel ruckartig gelöst wird. Da sowohl der Spanngurt als auch der Kantermchutzwinkel sowie die zu sichernden Güter beim Verspannen des Spanngurtes einen gewissen Abteil an Verformungsenergie speichern, wird diese beim Lösen des Spanngurtes in kinetische Energie umgewandelt, was dazu führt, dass der Kantenschutzwinkel gelegentlich weggeschleudert wird. Das Herumfliegen der Kantenschutzwinkel stellt ein erhebliches Sicherheitsrisiko für die Transporteure bzw. Monteure dar.

Ein Ladungssicherungswinkel der eingangs genannten Art ist aus der WO 2006/125107 A2 bekannt. Dieser besteht aus mehreren Werkstoffen. Der Führungsschlitz ist geschlossen, so dass der Spanngurt über seine vollständige Länge durch die Führungsöffnung gezogen werden muss.

Die US 4 938 357 beschreibt einen einfachen Ladungssicherungswinkel aus einem elastisch nachgiebigen Kunststoff. Eine Flanke eines Führungsschlitzes ist elastisch aufbiegbar, um den Spanngurt seitlich einzuführen.

Die US 2003/106187 A1 beschreibt einen Ladungssicherungswinkel einfacher Art, bei welcher der Spanngurt durch geschlossene Öffnungen durchgeführt wird.

Die US 5 226 764 A schließlich beschreibt einen sehr aufwendigen Ladungssicherungswinkel aus mehreren Teilen mit einer geschlossenen Fangvorrichtung.

Die Aufgabe der vorliegenden Erfindung besteht daher darin, einen ladungssicherungswinkel zu schaffen, der beim Lösen des Spanngurtes keine Gefahr darstellt und bei welchem der Spanngurt nicht über seine gesamte Länge eingezogen werden muss.

Erfindungsgemäß wird die Aufgabe durch einen Ladungssicherungswinkel der eingangs beschriebenen Art gelöst, der aus einem Blechteil besteht und bei welchem der Führungsschlitz eine seitliche Einführöffnung zum Einführen des Spanngurtes in den Führungsschlitz aufweist, die mittig auf der Seite des Führungsschlitzes angeordnet ist, die der Anlageseite des Spanngurts entgegengesetzt ist, und eine Breite besitzt, die schmaler als die des Spanngurtes ist.

Der Vorteil des erfindungsgemäßen Ladungssicherungswinkels besteht darin, dass der Ladungssicherungswinkel beim Lösen des Spanngurtes an diesem gehalten ist . Der Ladungssichetungswinkel kann folglich nicht mehr unkontrolliert herumfliegen. Zum Haltendes Ladungssicherungswinkels an dem Spanngurt ist letzterer in die Fangvorrichtung einführbar.

Die Fangvorrichtung besteht aus wenigstens einem Führungsschlitz zum Durchführen des Spanngurtes besteht, wobei der Führungsschlitz größer als der Querschnitt des durchzuführenden Spanngurtes ausgebildet ist. Dadurch ist der Ladungssicherungswinkel an dem Spanngurt zumindest geringfügig beweglich gehalten, um den Spanngurt ohne eine Verlagerung des Ladungssichexungswinkels in Bezug zu den zu sichernden Gütern spannen zu können.

Erfindungsgemäß weist der Führungsschlitz eine seitliche Einführöffnung zum Einführen des Spanngurtes auf. Dadurch kann der Spanngurt zunächst schlaufenartig lose um die zu transportierenden Güter gelegt werden. Die Ladungssicherungswinkel können in ihrer Position auf die Kanten der Güter aufgesetzt werden und der Spanngurt kann nachträglich in den Führungsschlitz eingeführt werden, um anschließend den Spanngurt au spannen. Ein Einziehen des Spanngurtes über seine gesamte Länge entfällt. Die Einführöffnung ist mittig auf der Seite des Führungsschlitzes angeordnet, die der Anlageseite des Spanngurtes entgegengesetzt ist, und besitzt eine Breite, die schmaler als die des Spanngurtes ist. Beim Spannen des Spanngurtes kann es dadurch nicht zu einem Herausrutschen aus dem Führungsschlitz kommen, da die Seite, an der der Spanngurt anlegt, eine geschlossene Flanke aufweist. Da die Einführöffnung schmaler als die Breite des Spanngurtes ist, kann es auch nicht zu einem unbeabsichtigten Herausrutschen des Spanngurtes aus dem Führungsschlitz kommen, wenn der Spanngurt nicht gespannt ist. Das Herausnehmen des Spanngurtes aus dem Führungsschlitz ist ohne großen Kraftaufwand möglich, indem der Spanngurt, bei dem es sich in der Regel um ein Gewebe handelt, leicht verformt, d. h. gekrümmt wird, um mit einer Seitenkante in die Einführöffnung zu gelangen.

Weiterhin bevorzugt ist eine Ausführungsform, bei der die Weite zwischen wenigstens einer Schlitzflanke des Führungsschlitzes und einer in die entgegengesetzte Richtung weisenden Flanke der Einführungsöffnung geringfügig größer ist als die Breite des Spanngurtes. Dadurch kann der Spanngurt einfach in den Führungsschlitz eingeführt werden, ohne dass die Gefahr eines Herausrutschens besteht. Gegebenenfalls kann der Spanngurt auch leicht verformt werden, was im entspannten Zustand ohne weiteres möglich ist.

Weiterhin bevorzugt ist eine Ausführungsform, bei welcher eine Flanke des Führungsschlitzes in Verlängerung eines Andruckbereichs angeordnet ist. Dadurch ist gewährleistet, dass die Spannkraft über den Andruckbereich in den Ladungssicherungswinkel eingeleitet wird und nicht über die Flanke des Führungsschlitzes. Um den Spanngurt in der Mitte des Führungschlitzes zu zentrieren und einen kontakt der Seitenränder des Spanngurtes mit den seitlichen Rändern des FührungsSchlitzes zu vermeiden, können an dem Andruckbereich oder zwischen dem Andruckbereich und dem Führungsschlitz zwei Führungen vorhanden sein, z. B. in Form von runden Erhebungen.

Besonders bevorzugt ist eine Ausführungsform, bei der der Ladungssicherungswinkel einen Querschnitt besitzt der mindestens einen im wesentlichen Z-förmigen Bereich aufweist, wobei die Außenkante der Stoßstelle eines ersten und eines zweiten Schenkels den ersten Andruckbereich bilden und der zweite Andruckbereich durch ein Segment gebildet ist, das an einem freien Ende eines dieser zwei Schenkel angeordnet und mit der Fangvorrichtung ausgebildet ist. Dadurch kann der Ladungssicherungswinkel möglichst kostengünstig hergestellt werden.

Vorzugsweise ist das Segment selbst ebenfalls Z-förmig, wobei der mittlere Schenkel des Segments den zweiten Andruckbereich bildet und im freien Schenkel des Segments der Führungsschlitz ausgebildet ist, der bis zum mittleren Schenkel reicht. Der Ladungssicherungswinkel kann dadurch einstückig hergestellt werden, beispielsweise aus abgekantetem Blech. Zur Erhöhung der Stabilität können senkrecht zu den Stoßstellen der Schenkel verlaufende Aussteifungen vorgesehen sein.

In einer bevorzugten Ausführungsform ist der Ladungssicherungswinkel unter den Spannkräften des Spanngurtes verformbar. Dadurch lassen sich Lastspitzen beim Transport durch den Ladungssicherungswinkel etwas abfedern, so dass die Gefahr von Transportschäden reduziert wird.

Die Erfindung befasst sich auch mit der Verwendung des Ladungssicherungswinkels nach einer der vorhergehend beschriebenen Ausführungsformen in einem Transportsicherungssystem zur Transportsicherung von kantigen Gütern auf einer Ladefläche, wobei wenigstens ein Ladungssicherungswinkel zum Aufsetzen auf eine Kante des Ladeguts vorgesehen ist, durch dessen Fangvorrichtung ein Spanngurt verläuft, dessen Enden an einem Rahmenelement befestigbar sind und der mittels einer Spannvorrichtung spannbar ist. Beim Transport von beispielsweise Gipskartonplatten sind vorzugsweise zwei Ladungssicherungswinkel pro Spanngurt vorgesehen.

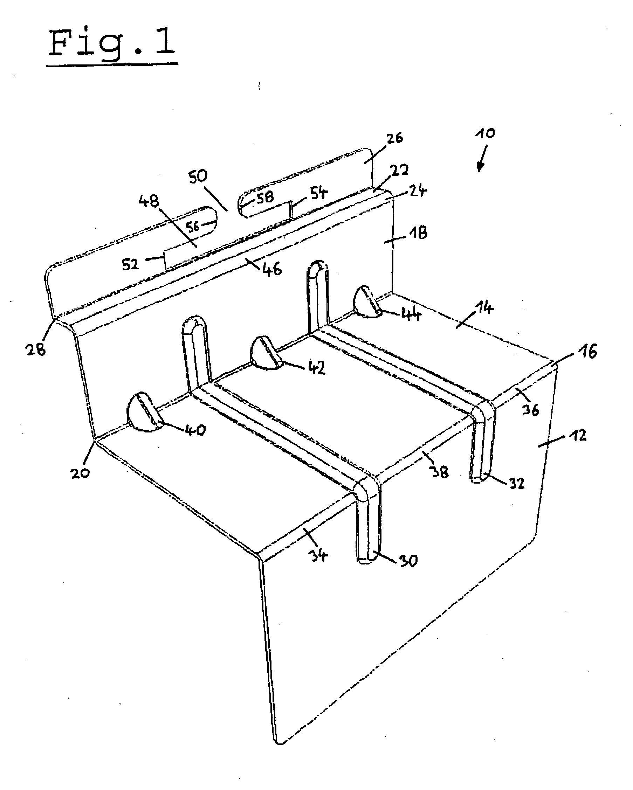

Nachfolgend wird anhand der beigefügten Zeichnung näher auf zwei Ausführungsbeispiele der Erfindung eingegangen. Fig. 1 zeigt eine perspektivische Ansicht eines Ladungssicherungswinkels.

Fig. 1 zeigt eine perspektivische Ansicht eines Ladungssicherungswinkel 10, der aus einem mehrfach abgekanteten bzw. gebogenen Blechteil besteht. Ein erster Schenkel 12 ist mit einem zweiten Schenkel 14 über eine erste Biegekante 16 als Stoßstelle zwischen dem ersten Schenkel 12 und dem zweiten Schenkel 14 senkrecht verbunden.

An den zweiten Schenkel 14 schließt sich ein Segment an, das einen im wesentlichen Z-förmigen Querschnitt aufweist. Der zweite Schenkel 14 ist hierbei mit einem dritten Schenkel 18 über eine zweite Biegekante 20 senkrecht verbunden. Der dritte Schenkel 18 ist mit einem vierten Schenkel 22 über eine dritte Biegekante 24 senkrecht verbunden. Der vierte Schenkel 22, der den mittleren Schenkel des Segments darstellt, ist mit einem fünften Schenkel 26 über eine vierte Biegekante 28 senkrecht verbunden, wobei der fünfte Schenkel 26 den freien Schenkel des Segments bildet.

Da der Halter aus einem rechteckigen Blechrohling gefertigt ist, weisen die Schenkel 12, 14, 18, 22, 26 die gleiche Breite in Richtung der parallel zueinander verlaufenden Biegekanten 16, 20, 24, 28 auf. Der erste Schenkel 12 und der zweite Schenkel 14 sind annähernd gleich lang. Der dritte Schenkel 18 weist gegenüber dem ersten Schenkel 12 und dem zweiten Schenkel 14 eine geringere Länge auf. Der vierte Schenkel 22 und der fünfte Schenkel 26 sind im Vergleich zu dem dritten Schenkel 18 kürzer.

Durch die Biegevorgänge im Bereich der Biegekanten 16, 20, 24, 28 entstehen an den Außenseiten Mindestradien, welche die Ausbildung scharfer Kanten vermeiden. Senkrecht zu den Biegekanten 16, 20 sind eine erste Sicke 30 und eine parallel zur ersten Sicke 30 verlaufende zweite Sicke 32 angeordnet, die sich jeweils über die gesamte Länge des zweiten Schenkels 14 erstrecken und über die erste Biegekante 16 und die zweite Biegekante 20 hinaus mit der jeweils gleichen Abmessung in die angrenzenden Schenkel 12, 18 ragen. Die beiden Sicken 30, 32 unterteilen die erste Biegekante 16 in drei ungefähr gleich große Bereiche. Der mittlere Bereich zwischen zwei seitlichen Bereichen 34, 36 bildet einen ersten Andruckbereich 38.

Zur zusätzlichen Aussteifung sind an der zweiten Biegekante 20 auf der Seite des durch den zweiten Schenkel 14 und den dritten Schenkel 18 gebildeten Innenwinkels drei zusätzliche Aussteifungen 40, 42, 44 derart gleichmäßig verteilt angeordnet, dass die erste Aussteifung 40 zwischen dem seitlichen Rand und der ersten Sicke 30, die zweite Aussteifung 42 zwischen der ersten Sicke 30 und der zweiten Sicke 32 und die dritte Aussteifung zwischen der zweiten Sicke 32 und dem anderen seitlichen Rand angeordnet sind.

Die dritte Biegekante 24 bildet im mittleren Bereich einen zweiten Andruckbereich 46 für einen nicht dargestellten Spanngurt. Zur Transportsicherung beispielsweise plattenförmiger Elemente auf einer Ladefläche wird der Ladungssicherungswinkel 10 mit der Unterseite des zweiten Schenkels 14, d. h. mit der den Sicken 30, 32 abgewandten Seite, auf den Rand des obersten Elements gelegt, so dass der erste Schenkel 12 seitlich an den Stirnflanken der plattenförmigen Elemente anliegt. Der dritte Schenkel 18 ist damit senkrecht zu der Fläche des obersten Elements des Stapels ausgerichtet. Der Spanngurt wird von der Rahmenkonstruktion aus so über den Ladungssicherungswinkel 10 gerührt, dass er in dem ersten Andruckbereich 38 zwischen der ersten Sicke 30 und der zweiten Sicke 32 auf der ersten Biegekante 16 aufliegt, von wo er abgewinkelt zur dritten Biegekante 24 verläuft, auf der er in dem zweiten Andruckbereich 46 aufliegt. Von der Biegekante 24 verläuft er parallel zum obersten Element des Stapels zu einem anderen auf der gegenüberliegenden Seite des Stapels befindlichen Ladungssicherungswinkel 10, über den der Spanngurt in entsprechender Weise zur Rahmenkonstruktion verläuft. Die Sicken 30, 32 verhindern ein seitliches Verrutschen des Spanngurtes oder eine seitliche Verlagerung des Ladungssicherungswinkels 10 im Bereich der ersten Biegekante 16.

Der fünfte Schenkel 26 weist eine Fangvorrichtung zum Verhindern eines unkontrollierten Umherfliegens des Ladungssicherungswinkels 10 beim Lösen des Spanngurtes auf. Die Fangvorrichtung, in welche der Spanngurt einführbar ist, besteht im wesentlichen aus einem Führungsschlitz 48 zur Durchführung des Spanngurtes. Der Führungsschlitz 48 ist dabei größer als der Querschnitt des durchzuführenden Spanngurtes ausgebildet. Eine Flanke des Führungsschlitzes 48 ist in Verlängerung des zweiten Andruckbereichs 46 angeordnet. Zum Einführen des Spanngurtes in den Führungsschlitz 48 weist letzterer eine seitliche Einführöffnung 50 auf, die mittig auf der Seite des Führungsschlitzes 48 angeordnet ist, die der Anlageseite des Spanngurtes entgegengesetzt ist. Die Einführöffnung 50 ist schmaler als die Breite des Spanngurtes. Der Führungsschlitz 48 wird seitlich durch Schlitzflanken 52, 54 begrenzt. Die Einführöffnung 50 wird seitlich durch zwei Flanken 56, 58 begrenzt. Die Weite zwischen der Schlitzflanke 52 des Führungsschlitzes 48 und der in die entgegengesetzte Richtung weisenden Flanke 58 der Einführöffnung 50 ist geringfügig größer als die Breite des Spanngurtes. Dadurch kann der Spanngurt einfach in den Führungsschlitz 48 eingeführt werden. Der Spanngurt, der in der Regel aus einem Gewebe besteht, muss dabei nur leicht verformt werden, um ihn über die Einführöffnung 50 in den Führungsschlitz 48 einzuführen. Zum leichteren Einführen sind die Flanken 56, 58 der Einführöffnung 50 abgerundet.

Beim Spannen des Spanngurtes kommt es trotz der Aussteifungen 40, 42, 44 und der Sicken 30, 32 zu Verformungen des Ladungssicherungswinkels 10. Die in dem elastisch verformbaren Ladungssicherungswinkel 10 gespeicherte Verformungsenergie wird bei einem ruckartigen Lösen, was in der Regel der Fall ist, zu einem erheblichen Teil in kinetische Energie umgewandelt. Da der Ladungssicherungswinkel 10 über den Führungsschlitz 48 an dem Spanngurt gehalten ist, kann es jedoch nicht zu einem unkontrollierten Umherfliegen des Ladungssicherungswinkels 10 kommen, was eine erhebliche Gefährdung der Sicherheit der Nutzer bedeuten würde.

Da plattenförmige Elemente üblicherweise mit einem oder mehreren Spanngurten befestigt werden, die jeweils an einer Rahmenkonstruktion festgelegt werden, kommen vorzugsweise zwei Ladungssicherungswinkel 10 pro Spanngurt zum Einsatz. Wenn die Spanngurte sehr häufig verwendet werden, können die Ladungssicherungswinkel 10 auch an den Spanngurten eingehängt verbleiben. Da die Ladungssicherungswinkel 10 am Spanngurt gehalten sind, kann das Verstauen der Ladungssicherungswinkel 10 entfallen. Außerdem sind die Ladungssicherungswinkel 10 bei der nächsten Verwendung direkt verfügbar.

Weiterhin ist es möglich, den Ladungssicherungswinkel 10 mit einer zweiten Fangvorrichtung zu versehen. Dazu schießt sich z. B. an das freie Ende des ersten Schenkels 12 ein weiterer Schenkel, bzw. eine weitere Abkantung, mit einem weiteren Führungsschlitz an. Der Ladungssicherungswinkel 10 ist damit an zwei Stellen am Spanngurt gehalten und verrutscht bei der Handhabung der Spanngurte nicht mehr so leicht. Für das Sichern der Stapel müssen nur noch die Spanngurte mit den daran gehaltenen Ladungssicherungswinkeln 10 über die Stapel gelegt und nach dem Ausrichten der Winkel gespannt werden.

## Patentansprüche

1. Ladungssicherungswinkel (10) mit wenigstens zwei im wesentlichen rechtwinklig zueinander liegenden Schenkeln (12, 14) zur Transportsicherung von Gütern und wenigstens zwei Andruckbereichen (38, 46) für einen über den Winkel verlaufenden Spanngurt, wobei die Andruckbereiche (38, 46) in der Verlaufsrichtung des Spanngurtes beabstandet sind und der Ladungssicherungswinkel eine Fangvorrichtung (48,118) zum Verhindern eines unkontrollierten Umherfliegens beim Lösen des Spanngurtes aufweist, wobei die Fangvorrichtung aus wenigstens einem Führungsschlitz (48) zum Durchführen des Spanngurtes besteht und der Führungsschlitz (48) größer als der Querschnitt des durchzuführenden Spanngurtes ausgebildet ist, **dadurch gekennzeichnet, dass** der Ladungssicherungswinkel aus einem Blechteil besteht und der Führungsschlitz (48) eine seitliche Einführöffnung (50) zum Einführen des Spanngurtes in den Führungsschlitz (48) aufweist, die mittig auf der Seite des Führungsschlitzes (48) angeordnet ist, die der Anlageseite des Spanngurts entgegengesetzt ist, und eine Breite besitzt, die schmaler als die des Spanngurtes ist.

2. Ladungssicherungswinkel nach Anspruch 1, **dadurch gekennzeichnet, dass** die Weite zwischen wenigstens einer Schlitzflanke (52, 54) des Führungsschlitzes (48) und einer in die entgegengesetzte Richtung weisenden Flanke (58, 56) der Einführöffnung (50) geringfügig größer ist als die Breite des Spanngurtes.

3. Ladungssicherungswinkel nach Anspruch 1 oder 2, **dadurch gekennzeichnet, dass** die untere Flanke des FührungsSchlitzes (50) in Verlängerung eines Andruckbereichs (46) angeordnet ist.

4. Ladungssicherungswinkel nach einem der vorhergehenden Ansprüche, **dadurch gekennzeichnet, dass** er einen Querschnitt besitzt, der mindestens einen im wesentlichen Z-förmigen Bereich aufweist, wobei die Außenkante der Stoßstelle (16) eines ersten (12) und eines zweiten Schenkels (14) den ersten Andruckbereich (38) bilden und der zweite Andruckbereich (46) durch ein Segment gebildet ist, das an einem freien Ende eines dieser zwei Schenkel (12, 14) angeordnet und mit der Fangvorrichtung ausgebildet ist.

5. Ladungssicherungswinlcel Anspruch 4, **dadurch gekennzeichnet, dass** das Segment Z-förmig ist, wobei der mittlere Schenkel (22) des Segments den Zweiten Andruckbereich (46) bildet und im freien Schenkel (26) des Segments der Führungsschlitz (48) ausgebildet ist, der bis zum mittleren Schenkel (22) reicht.

6. Ladungssicherungswinkel nach einem der vorhergehenden Ansprüche, **dadurch gekennzeichnet, dass** er unter den Spannkräften des Spanngurtes verformbar ist.

7. Verwendung eines Ladungssicherungswinkels nach einem der vorhergehenden Ansprüche in einem Transportsicherungssystem zur Transportsicherung von kantigen Gütern auf einer Ladefläche, wobei wenigstens ein Ladungssicherungswinkel zum Aufsetzen auf eine Kante des Ladeguts vorgesehen ist, durch dessen Fangvorrichtung ein Spanngurt verläuft, dessen Enden an einem Rahmenelement befestigbar sind und der mittels einer Spannvorrichtung spannbar ist.

## Claims

1. A load-securing angle bracket (10) with at least two arms (12,14) lying substantially at right angles to one another for securing goods in transit, and at least two pressure zones (38,46) for a retaining strap extending over the angle bracket, wherein the pressure zones (38,46) are spaced apart in the extension direction of the retaining strap and the load-securing angle bracket has a catch device (48,118) to prevent it from flying about in an uncontrolled manner when the retaining strap is released, wherein the catch device comprises at least one guide slot (48) for the passage of the retaining strap and the guide slot (48) is larger than the cross-section of the retaining strap to be passed therethrough, **characterised in that** the load-securing angle bracket comprises a sheet-material part and the guide slot (48) has a lateral insertion opening (50) for the insertion of the retaining strap into the guide slot (48), which opening is disposed centrally on the side of the guide slot (48) which is opposite the contact side of the retaining strap, and is of a width which is narrower than that of the retaining strap.

2. A load-securing angle bracket according to Claim 1, **characterised in that** the width between at least one slot flank (52,54) of the guide slot (48) and of one flank (58,56) of the insertion opening (50) facing in the opposite direction is slightly larger than the width of the retaining strap.

3. A load-securing angle bracket according to Claim 1 or 2, **characterised in that** the lower flank of the guide slot (50) is arranged in prolongation of the pressure zone (46).

4. A load-securing angle bracket according to any one of the preceding Claims, **characterised in that** it is of a cross-section which has at least one substantially Z-shaped zone, wherein the outer edge of the butt joint (16) of a first arm (12) and of a second arm (14) forms the first pressure zone (38) and the second pressure zone (46) is formed by a segment which is arranged at one free end of these two arms (12,14) and is formed with the catch device.

5. A load-securing angle bracket according to Claim 4, **characterised in that** the segment is Z-shaped, wherein the central arm (22) of the segment forms the second pressure zone (46) and is formed in the free arm (26) of the segment of the guide slot (48), which extends as far as the central arm (22).

6. A load-securing angle bracket according to any one of the preceding Claims, **characterised in that** it is deformable under the clamping forces of the retaining strap.

7. Use of a load-securing angle bracket according to any one of the preceding Claims in a transit securing system for securing in transit angular goods on a load surface, wherein at least one load-securing angle bracket is provided to be mounted on one edge of the loaded goods, through the catch device of which extends a retaining strap, the ends of which can be fastened to a frame element and which can be tightened by means of a tightening device.

## Revendications

1. Equerre de blocage de charge (10) comportant au moins deux branches (12, 14) faisant entre elles pratiquement un angle droit pour bloquer des marchandises pour le transport, ainsi qu'au moins deux zones d'appui (38, 46) pour une sangle passant sur l'équerre,
- les zones d'appui (38, 46) étant écartées dans la direction de passage de la sangle et l'équerre comporte un dispositif d'accrochage (48, 118) pour éviter de s'échapper de manière incontrôlée lors de la libération de la sangle,
- le dispositif d'accrochage se composant d'au moins une fente de guidage (48) pour le passage de la sangle, et la fente de guidage (48) est plus grande que la section de la sangle qui la traverse,
**caractérisée en ce que**
la cornière est une pièce en tôle et la fente de guidage (48) comporte une ouverture d'introduction (50) latérale, pour introduire la sangle dans la fente de guidage (48), cette ouverture étant au milieu du côté de la fente de guidage (48), à l'opposé du côté d'appui de la sangle et cette fente a une largeur inférieure à la largeur de la sangle.

2. Equerre de blocage de charge selon la revendication 1,
**caractérisée en ce que**
la largeur entre au moins un flanc (52, 54) de la fente de guidage (48) et un flanc (58, 56) tourné dans la direction opposée de l'ouverture d'entrée (50), est légèrement supérieure à la largeur de la sangle.

3. Equerre de blocage de charge selon la revendication 1 ou 2,
**caractérisée en ce que**
le flanc inférieur de la fente de guidage (50) se situe dans le prolongement d'une zone d'appui (46).

4. Equerre de blocage de charge selon l'une des revendications précédentes,
**caractérisée en ce qu'**
elle possède une section ayant au moins une zone essentiellement en forme de Z,
l'arête extérieure de la zone d'appui (16) d'une première branche (12) et d'une seconde branche (14) formant la première zone d'appui (38), et la seconde zone d'appui (46) est formée par un segment dont l'extrémité libre est associée à l'une des deux branches (12, 14) et qui est lui-même réalisé comme dispositif d'accrochage.

5. Equerre de blocage de charge selon la revendication 4,
**caractérisée en ce que**
le segment est en forme de Z et la branche médiane (22) du segment, forme la seconde zone d'appui (46), la fente de guidage (48) étant réalisée dans la branche libre (26) du segment, la fente de guidage allant jusqu'à la branche médiane (22).

6. Equerre de blocage de charge selon l'une des revendications précédentes,
**caractérisée en ce qu'**
elle est déformable sous l'effet des contraintes de serrage de la sangle.

7. Utilisation d'une équerre de blocage de charge selon l'une des revendications précédentes dans un système de fixation de transport pour une installation de sécurité de transport concernant de petits produits munis d'arêtes sur une surface de chargement,
- au moins une cornière de fixation de chargement étant prévue pour être appliquée sur une arête du produit à charger, et ses extrémités se fixent à un élément de châssis et peut être tendu à l'aide d'un dispositif de mise en tension.
